**Europäisches Patentamt**

**European Patent Office**

**Office européen des brevets**

(19)

(11) Veröffentlichungsnummer: **0 112 437**
**B1**

(12) # EUROPÄISCHE PATENTSCHRIFT

(45) Veröffentlichungstag der Patentschrift:
20.05.87

(51) Int. Cl.⁴: **B 23 B 35/00**

(21) Anmeldenummer: **83108641.8**

(22) Anmeldetag: **01.09.83**

(54) Werkzeug für eine genaue Bearbeitung und eine Feinbearbeitung von zylindrischen Profilöffnungen.

(30) Priorität: **22.12.82 BG 58988/82**

(43) Veröffentlichungstag der Anmeldung:
**04.07.84 Patentblatt 84/27**

(45) Bekanntmachung des Hinweises auf die Patenterteilung:
**20.05.87 Patentblatt 87/21**

(84) Benannte Vertragsstaaten:
**CH DE FR GB LI SE**

(56) Entgegenhaltungen:
**DE-A-3 025 482**
**DE-C-306 297**

(73) Patentinhaber: **N P S P po HYDROPLASTITSCHNA OBRABOTKA na METALITE, Brjanska- Strasse 31B, Gabrovo (BG)**

(72) Erfinder: **Petkov, Georgi Kostov, Dipl.- Ing., Svischtovska- Strasse 94- A, Gabrovo (BG)**
Erfinder: **Nezov, Nikola Mitschev, Dipl.- Ing., Venez- Strasse 14, Gabrovo (BG)**
Erfinder: **Botev, Botjo Pentschev, Dipl.- Ing., Vidima- Strasse 17, App. 13, Gabrovo (BG)**
Erfinder: **Bankovski, Dimiter Nikolov, Dipl.- Ing., Svischtovska- Strasse 78- 2, Gabrovo (BG)**

(74) Vertreter: **Finck, Dieter, Patentanwälte v. Füner, Ebbinghaus, Finck Mariahilfplatz 2 & 3, D-8000 München 90 (DE)**

EP 0 112 437 B1

**Beschreibung**

Die Erfindung betrifft ein Werkzeug für eine genaue Bearbeitung und eine Feinbearbeitung von zylindrischen Profilbohrungen mit einem Werkzeugschaft, der aufeinanderfolgend einen führenden, schneidenden und plastisch verformenden Teil aufweist, dessen Form der zu bearbeitenden Profilbohrung entspricht.

Das zugehörige Werkzeug kann für die Bearbeitung von Bohrungen eingesetzt werden, bei denen das Verhältnis von Länge zu Durchmesser größer als 3 ist.

Es ist bereits ein Werkzeug zur genauen Bearbeitung von zylindrischen Profilbohrungen längs ihrer Achse bekannt, wobei dieses Werkzeug als eine Räumnadel, die unter Zug- bzw. Druckvorschub wirkt, bezeichnet wird (P. Subtschev, "Spanabhebende Werkzeugmaschinen", Seite 92, Sofia, 1974).

Die Bauteile dieses bekannten Werkzeugs verschleißen infolge der schweren Belastungen, wegen der schlechten Schmierung und der ungenügenden Kühlung schnell, außerdem ist das Entfernen der Späne aus dem Schneidbereich schwierig.

Zur Feinbearbeitung von zylindrischen Bohrungen, deren Verhältnis von Länge zu Durchmesser größer als 3 ist, ist ein Werkzeug bekannt, bei dem in eine plastisch wirkende Verformungszone ein unter Druck stehendes Fluid eingeführt wird (BG-PS 21914).

Dieses bekannte Werkzeug erfordert jedoch bei seiner Anwendung eine genaue Bearbeitung und anschließend eine Feinbearbeitung, vor allem wenn die zu bearbeitende Bohrung Fehler im Material aufweist. Für die Bearbeitung von Bohrungen in Rohlingen, deren äußere Oberfläche ein ungleichmäßiges Profil hat, läßt sich dieses Werkzeug nicht anwenden, da sich längs der Bohrung bleibende Verformungen ausbilden.

Die der Erfindung zugrunde liegende Aufgabe besteht deshalb darin, ein Werkzeug der eingangs genannten Art zu schaffen, mit dem spanabhebende Bearbeitung und Verformung in einem oder mehreren Arbeitsgängen bei hoher Verschleißfestigkeit des Werkzeugs durchgeführt werden können, wobei das Abführen der Späne aus dem Schneidbereich, eine gute Schmierung und Kühlung des Werkzeugs und niedrige Schneid- und Verformungskräfte gewährleistet sein sollen.

Diese Aufgabe wird mit dem Werkzeug der eingangs genannten Art dadurch gelöst, daß im Werkzeugschaft eine axiale Sackbohrung ausgebildet ist, die durch eine erste Reihe von radialen Kanälen mit dem plastisch verformenden Teil und durch eine zweite Reihe von radialen Kanälen mit dem schneidenden Teil verbunden ist, der mindestens eine erste und eine zweite Reihe von Schneidelementen und einen Schneidkranz aufweist, wobei in der vorderen Oberfläche des Schneidkranzes Drosselöffnungen angeordnet sind, die mit der zweiten Reihe von radialen Kanälen durch einen Ringkanal verbunden sind.

Mit dem erfindungsgemäßen Werkzeug werden zuerst Späne entlang der bearbeiteten Öffnung abgenommen. Danach wird eine plastische Verformung durch Zuführung eines Fluids unter Druck in der plastischen Verformungszone durchgeführt, wobei gleichzeitig in der Zerspanungszone mit großer Geschwindigkeit ebenfalls Fluid unter Druck zugeführt und gegen die vom Werkstoff abgetrennten Späne gerichtet wird.

Mit dem erfindungsgemäßen Werkzeug lassen sich die Späne leicht brechen und abführen. Außerdem läßt sich das Werkzeug auf einfache Weise ausreichend kühlen, so daß sich Bohrungen mit einem Verhältnis zwischen Länge und Durchmesser von mehr als 3 bearbeiten lassen. Mit dem Werkzeug können außerdem Bohrungen mit ungleichmäßigem Profil an der äußeren Oberfläche bearbeitet werden, ohne daß vor der Feinbearbeitung eine Bearbeitung der Bohrungen bei Oberflächenmaterialfehlern erforderlich ist. Das erfindungsgemäße Werkzeug hat aufgrund der guten Schmierung und ausreichenden Wärmeabfuhr eine lange Lebensdauer.

Zur leichteren Herstellung des Werkzeugs kann der schneidende Teil aus einem Schneidkranz, einer in Arbeitsrichtung vorderen Muffe und einer hinteren Muffe zusammengesetzt sein, die auf dem Werkzeugschaft aufgesteckt und mit einer Dichtung abgedichtet sind, wobei die Drosselöffnungen in der Stirnfläche der hinteren Muffe als Nuten ausgebildet sind.

Der Schneidkranz kann aus einer zusammengesetzten Muffe bestehen, die auf dem Werkzeugschaft sitzt und mit einer Dichtung abgedichtet ist.

Ebenso kann der plastisch verformende und der hintere führende Teil von einer zusammengesetzten Muffe gebildet werden, die auf dem Werkzeugschaft sitzt und mit einer Dichtung abgedichtet ist.

Die Zuführung von Fluid zu den Drosselöffnungen wird dadurch begünstigt, daß die hintere Muffe an ihrer Stirnfläche unter Bildung des Ringkanals innendurchmesserseitig abgeschrägt ist.

Zweckmäßigerweise besteht die in Arbeitsrichtung zweite Reihe von schneidenden Elementen aus einem ganzen Schneidkranz, während die in Arbeitsrichtung erste Reihe von schneidenden Elementen mit Zähnen mit einem seitlichen Freiwinkel von 3 bis 15° versehen ist.

Anhand von Zeichnungen wird die Erfindung beispielsweise näher erläutert. Es zeigt:

Fig. 1 einen Axialschnitt durch das Werkzeug,
Fig. 2 den Schnitt C-C von Fig. 1 bzw. 5,
Fig. 3 den Schnitt B-B von Fig. 1 bzw. 5,
Fig. 4 den Schnitt A-A von Fig. 1 bzw. 5 und
Fig. 5 im Axialschnitt eine weitere Ausführungsform des Werkzeugs.

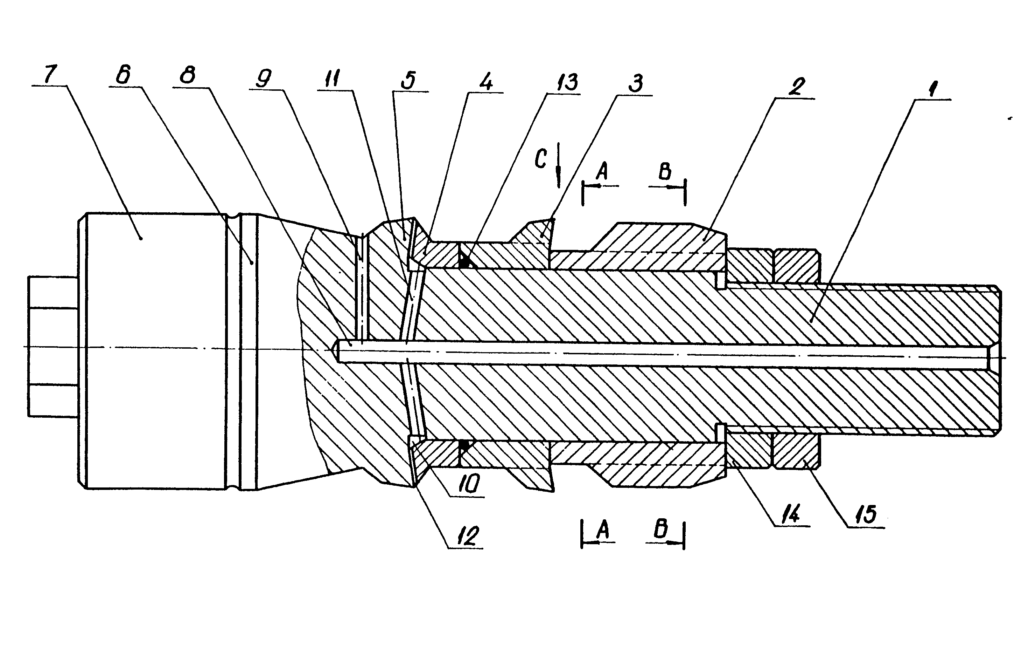

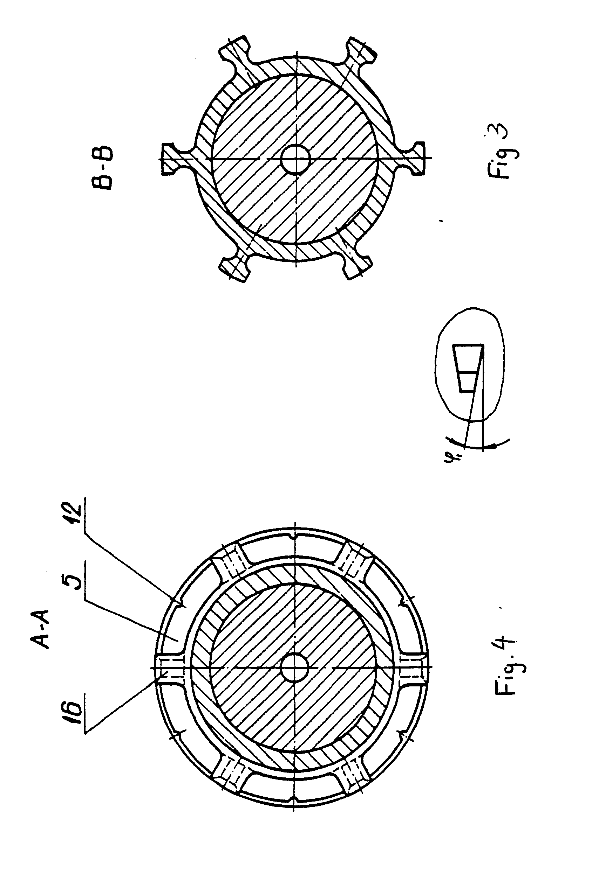

Das in Fig. 1 gezeigte Werkzeug hat einen Schaft 1, auf dem in Arbeitsrichtung aufeinanderfolgend ein vorderer führender Teil 2, ein zusammengesetzter schneidender Teil aus einer ersten Reihe 3 von Schneidelementen und aus einer zweiten Reihe 4 von Schneidelementen und aus einem Schneidkranz 5, weiter ein plastisch verformender Teil 6 und ein hinterer führender Teil 7 angeordnet sind. In dem Schaft 1 ist eine axiale Sackbohrung 8 vorgesehen, die durch eine erste Reihe von radialen Kanälen 9 mit dem plastisch verformenden Teil 6 und der hinteren Oberfläche des Schneidkranzes 5 verbunden ist. Die hintere Muffe, die die zweite Reihe 4 von Schneidelementen trägt, ist innendurchmesserseitig abgeschrägt, wodurch ein Ringkanal 10 gebildet wird, der durch eine zweite Reihe von radialen Kanälen 11 die axiale Sackbohrung 8 mit Drosselöffnungen 12 verbindet, die in der Stirnfläche der hinteren Muffe als Nuten ausgebildet sind. An der vorderen Muffe, die auf dem Schaft 1 aufgesteckt und mit einer Dichtung 13 abgedichtet ist, ist der vordere führende Teil 2 mit Hilfe einer Mutter 14 und einer Gegenmutter 15 angedrückt. Der führende Teil 2 ist ebenfalls auf den Schaft aufgesteckt und weist, wie in Fig. 3 gezeigt ist, Zähne auf. Der zusammengesetzte schneidende Teil hat mindestens zwei Reihen von Schneidelementen, von denen die in Arbeitsrichtung zweite Reihe einen ganzen Schneidkranz 5 bildet, während die erste Reihe 3 auf der vorderen Muffe ausgebildet ist und Zähne 16 aufweist, die in Fig. 4 gezeigt sind und einen seitlichen Freiwinkel φ von 3 bis 15° haben.

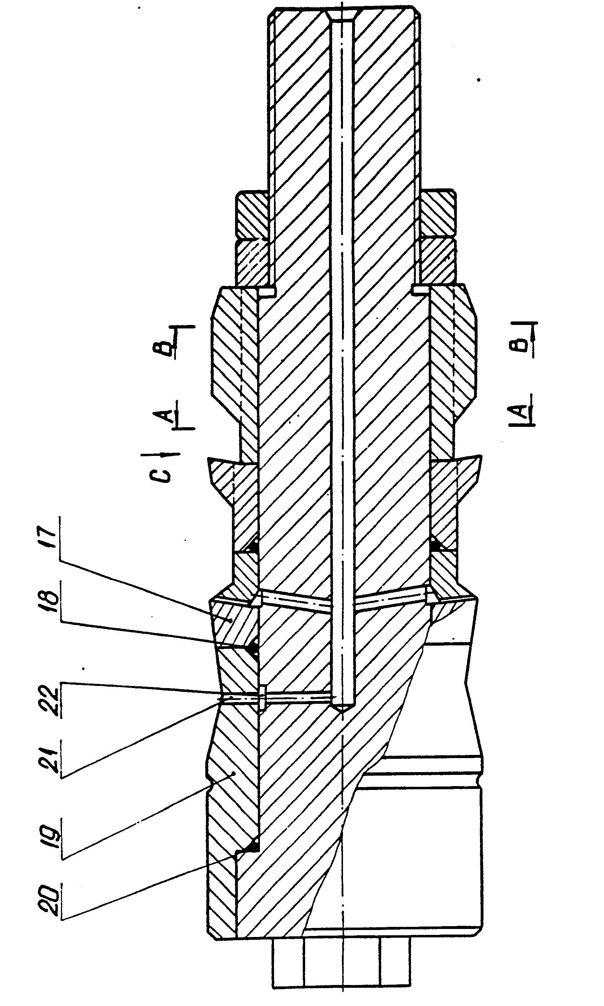

Wie aus Fig. 5 zu ersehen ist, kann der Schneidkranz 5 auch als Muffe 17 ausgebildet sein, die auf dem Schaft 1 sitzt und mit einer Dichtung 18 abgedichtet ist. Der plastisch verformende Teil 6 und der hintere führende Teil 7 können zusammen eine weitere Muffe 19 bilden, die auf dem Werkzeugschaft 1 sitzt und mit einer Dichtung 20 abgedichtet ist. Die Muffe 19 weist radiale Bohrungen 21 auf, die mit der ersten Reihe von radialen Kanälen 9 über den im Werkzeugschaft 1 gebildeten Ringkanal 22 verbunden sind. Das Werkzeug kann auch einteilig ausgeführt sein.

Das Werkzeug wird in die Öffnung des Werkstückes eingeführt. Durch Einwirkung einer Zug- oder Druckkraft auf einen hydraulischen Zylinder wird ein Fluid unter Druck gesetzt und durch eine Bohrung zu dem Werkzeug durch eine erste Reihe von radialen Kanälen 9 vor den plastisch verformenden Teil 6 und durch eine zweite Reihe von radialen Kanälen 11 durch die Drosselkanäle 12 zu der Schneidzone geführt. Dabei werden von dem Fluid die vom Werkstück abgetrennten Späne gebrochen und aus der Bohrung herausgespült.

Mit dem erfindungsgemäßen Werkzeug wurden auf einer Ziehräummaschine Werkstücke bearbeitet, die eine Bohrung von 32 mm Durchmesser und eine Länge von 260 mm hatten. Die Bearbeitungsgeschwindigkeit betrug 2 m/min. Die Ergebnisse sind in der nachstehenden Tabelle zusammengefaßt.

| Nr. | Länge, mm | Durch- messer der be- arbei- teten Bohrung, mm | Kraft $(N.10^4)$ | Druck des Schmier- mittels (bar) | Bemerkung |
|---|---|---|---|---|---|
| 1 | 260 | 32,4 | 3,5 | 283 | Falten in Schrau- benlinie |
| 2 | 260 | 32,4 | 10 | 283 | Reißen der Zieh- stange |
| 3 | 260 | 32,3 | 2,5 | 202 | Falten in Schrau- benlinie |
| 4 | 260 | 32,3 | 4 | 323 | Falten in Schrau- benlinie |
| 5 | 260 | 32,38 | 3,1 | 251 | Keine Spuren in der Bohrung |
| 6 | 260 | 32,37 | 3 | 243 | Keine Spuren in der Bohrung |
| 7 | 260 | 32,38 | 3 | 243 | Keine Spuren in der Bohrung |

**Patentansprüche**

1. Werkzeug für eine genaue Bearbeitung und eine Feinbearbeitung von zylindrischen Profilbohrungen mit einem Werkzeugschaft (1), der aufeinanderfolgend einen führenden (2), schneidenden (3, 4, 5) und plastisch verformenden (6) Teil aufweist, dessen Form der zu bearbeitenden Profilbohrung entspricht, dadurch gekennzeichnet, daß im Werkzeugschaft (1) eine axiale Sackbohrung (8) ausgebildet ist, die durch eine erste Reihe von radialen Kanälen (9) mit dem plastisch verformenden Teil und durch eine zweite Reihe von radialen Kanälen (11) mit dem schneidenden Teil verbunden ist, der mindestens eine erste und eine zweite Reihe (3, 4) von Schneidelementen und einen Schneidkranz (5) aufweist, wobei in der vorderen Oberfläche des Schneidkranzes (5) Drosselöffnungen (12) angeordnet sind, die mit der zweiten Reihe von radialen Kanälen (11) durch einen Ringkanal (10) verbunden sind.

2. Werkzeug nach Anspruch 1, dadurch gekennzeichnet, daß der schneidende Teil aus einem Schneidkranz (5), einer in Arbeitsrichtung vorderen Muffe und einer in Arbeitsrichtung hinteren Muffe, die die Schneidelemente (3, 4) tragen, zusammengesetzt ist, und daß die Muffen auf dem Werkzeugschaft (1) aufgesteckt und mit einer Dichtung (13) abgedichtet sind, wobei die Drosselöffnungen (12) in der Stirnfläche der hinteren Muffe als Nuten ausgebildet sind.

3. Werkzeug nach Anspruch 1 oder 2, dadurch gekennzeichnet, daß der Schneidkranz (5) eine zusammengesetzte Muffe (17) ist, die auf dem Werkzeugschaft (1) sitzt und mit einer Dichtung (18) abgedichtet ist.

4. Werkzeug nach einem der Ansprüche 1 bis 3, dadurch gekennzeichnet, daß der plastisch verformende Teil (8) und hintere führende Teil (7) von einer zusammengesetzten Muffe (19, Fig. 5) gebildet werden, die auf den Werkzeugschaft (1) aufgesteckt und mit einer Dichtung (20) abgedichtet ist.

5. Werkzeug nach einem der Ansprüche 1 bis 4, dadurch gekennzeichnet, daß die hintere Muffe an ihrer Stirnfläche unter Bildung des Ringkanals (10) innendurchmesserseitig abgeschrägt ist.

6. Werkzeug nach Anspruch 1, dadurch gekennzeichnet, daß die in Arbeitsrichtung zweite Reihe von schneidenden Elementen ein ganzer Schneidkranz (5) ist, und daß die in Arbeitsrichtung erste Reihe (3) von schneidenden Elementen mit Zähnen (16, Fig. 4) mit einem seitlichen Freiwinkel ($\varphi$) von 3 bis 15° versehen ist.

**Claims**

1. Tool for an exact as well as a fine machining of cylindrical section openings with a tool shaft which possesses in turn a guiding part (2), cutting part (3, 4, 5) and plastically deforming part (6) whose shape corresponds to the section opening to be worked, characterised in that there is formed in the tool shaft (1) an axial blind bore (8) which is connected by a first series of radial channels (9) with the plastically deforming part and by a second series of radial channels (11) with the cutting part, which possesses at least a first and a second series (3, 4) of cutting elements and a cutting rim (5) with throttle openings (12) being arranged in the forward surface of the cutting rim (5), which openings are connected with the second series of radial channels (11) by an annular channel (10).

2. Tool according to claim 1, characterised in that the cutting part of one cutting rim (5) is composed of a bush which is forward in the working direction and a bush which is to the rear in the working direction, which carry the cutting elements (3, 4) and that the bushes are mounted on the tool shaft (1) and are sealed off with a seal (13), with the throttle openings (12) being formed as grooves in the forward surface of the rear bush.

3. Tool according to claim 1 or 2, characterised in that the cutting rim (5) is a composite bush (17) which sits on the tool shaft (1) and is sealed by means of a seal (18).

4. Tool according to one of claims 1 to 3, characterised in that the plastically deformable part (8) and rear guiding part (7) are formed from a composite bush (19, Figure 5), which is fitted on the tool shaft and sealed with a seal (20).

5. Tool according to one of claims 1 to 4, characterised in that the rear bush is chamfered on the side of its internal diameter on its forward surface, with formation of the annular channel (10).

6. Tool according to claim 1, characterised in that the second row of cutting elements in the working direction is a complete cutting edge (5) and that the first row (3) of cutting elements in the working direction is provided with teeth (16, Figure 4) with a lateral clearance angle ($\varphi$) of 3 to 15°.

**Revendications**

1. Outil pour un usinage précis et un finissage de perçages profilés cylindriques, comportant une tige d'outil (1) qui possède, placées les unes à la suite des autres, une partie de guidage (2), une partie de coupe (3, 4, 5) et une partie réalisant une déformation plastique (6), dont la forme correspond au perçage profilé à usiner, caractérisé en ce que, dans la tige d'outil (1), est formé un perçage axial borgne (8) qui est relié, par l'intermédiaire d'une première rangée de canaux radiaux (9), à la partie réalisant une déformation plastique et, par l'intermédiaire d'une seconde rangée de canaux radiaux (11), à la partie de coupe, laquelle présente au moins une première et une seconde rangées (3, 4) d'éléments de coupe et une couronne de coupe (5), tandis que des orifices d'étranglement (12) sont disposés dans la surface libre avant de la couronne de coupe (5), ces orifices étant reliés à la seconde rangée de canaux radiaux (11) par l'intermédiaire d'un canal annulaire (10).

2. Outil selon la revendication 1, caractérisé en ce que la partie de coupe est formée par l'assemblage d'une couronne de coupe (5) d'un manchon avant par rapport à la direction de travail et d'un manchon arrière par rapport à la direction de travail, qui portent les éléments de cupe (3, 4) et en ce que les manchons sont montés sur la tige d'outil (1) et rendus étanches à l'aide d'un joint d'étanchéité (13), les orifices d'étranglement (12) ménagés dans la surface frontale du manchon arrière étant réalisés sous la forme de gorges.

3. Outil selon la revendication 1 ou 2, caractérisé en ce que la couronne de coupe (5) est un manchon rapporté (17), calé sur la tige d'outil (1) et rendu étanche à l'aide d'un joint d'étanchéité (18).

4. Outil selon l'une des revendications 1 à 3, caractérisé en ce que la partie réalisant une déformation plastique (8) et la partie de guidage arrière (7) sont constituées par un manchon rapporté (19, Figure 5), monté sur la tige d'outil (1) et rendu étanche par un joint d'étanchéité (20).

5. Outil selon l'une des revendications 1 à 4, caractérisé en ce qu'au niveau de sa surface frontale, le manchon arrière est biseauté du côté radialement intérieur, pour la formation du canal annulaire (10).

6. Outil selon la revendication 1, caractérisé en ce que la seconde rangée d'éléments de coupe vue dans la direction de travail constitue une couronne de coupe complète (5) et en ce que la première rangée (3) d'éléments de coupe vue dans la direction de travail est pourvue de dents (16, Figure 4) présentant un angle de dépouille latéral ($\varphi$) de 3 à 15°.

0 112 437

1

A-A

16    5    12

Fig. 4

B-B

Fig 3

0 112 437

20 19 21 22 18 17

C A B

A B

0 112 437